# EUROPEAN PATENT APPLICATION

(11) **EP 4 793 998 A1**
(43) Date of publication of application: **19.08.2026**
(21) Application number: 26157416.4
(22) Date of filing: 10.02.2026
(51) Int. Cl.: H01M 4/02, H01M 4/131, H01M 4/137, H01M 4/36, H01M 4/525, H01M 4/66, H01M 4/136, H01M 4/58, H01M 4/62

(54) **POSITIVE ELECTRODE FOR RECHARGEABLE LITHIUM BATTERY AND RECHARGEABLE LITHIUM BATTERY INCLUDING SAME**

(30) Priority: 12.02.2025 KR 20250018233
(71) Applicant: SAMSUNG SDI CO., LTD., Yongin-si, Gyeonggi-do 17084 (KR)
(72) Inventor: PARK, Jinseok, 17084 Yongin-si, Gyeonggi-do (KR); NAM, Hyun, 17084 Yongin-si, Gyeonggi-do (KR); LEE, Minho, 17084 Yongin-si, Gyeonggi-do (KR); YEOU, Jungock, 17084 Yongin-si, Gyeonggi-do (KR); PARK, Jeongjoo, 17084 Yongin-si, Gyeonggi-do (KR)
(74) Representative: Michalski Hüttermann & Partner mbB

(57) **Abstract**

Disclosed are a positive electrode for a rechargeable lithium battery, and a rechargeable lithium battery including the positive electrode. The positive electrode for a rechargeable lithium battery includes a substrate, and a positive electrode active material layer on the substrate. The positive electrode active material layer includes MXene, a solid electrolyte, and a positive electrode active material. A distribution of the solid electrolyte increases from the lower portion to the upper portion of the positive electrode active material layer.

## Description

### BACKGROUND

### 1. Field

A positive electrode for a rechargeable lithium battery, and a rechargeable lithium battery including the positive electrode, are disclosed.

### 2. Description of the Related Art

A rechargeable lithium battery may be recharged and may have three or more times as high an energy density per unit weight as a conventional lead storage battery, nickel-cadmium battery, nickel hydrogen battery, nickel zinc battery, and the like. A rechargeable lithium battery may be also charged at a high rate, and may thus be commercially manufactured for, e.g., a laptop, a cell phone, an electric tool, an electric bike, and the like. Providing additional energy density to a rechargeable lithium battery may be advantageous.

A rechargeable lithium battery is typically manufactured by injecting an electrolyte into an electrode assembly, which includes a positive electrode including a positive electrode active material capable of intercalating/deintercalating lithium ions, and a negative electrode including a negative electrode active material capable of intercalating/deintercalating lithium ions.

When a solid electrolyte is applied to the positive electrode, the effects of reducing the R_{ct} (charge transfer resistance) of the positive electrode, reducing or suppressing lithium precipitation and side reactions, and reducing electrolyte solution consumption may be achieved.

However, because the generally known solid electrolyte is a material that typically has low electrical conductivity and does not exhibit high capacity, applying the solid electrolyte to the positive electrode may reduce the output, capacity, and cycle-life of the rechargeable lithium battery.

### SUMMARY

Some example embodiments include a positive electrode for a rechargeable lithium battery that has advantages of a solid electrolyte while compensating for the disadvantage of low conductivity.

Some example embodiments include a positive electrode for a rechargeable lithium battery including a substrate, and a positive electrode active material layer on the substrate. The positive electrode active material layer includes MXene, a solid electrolyte, and a positive electrode active material. The solid electrolyte has an increasing distribution from a lower portion near the substrate of the positive electrode active material layer to an upper portion further from the substrate.

Some example embodiments include a rechargeable lithium battery including a positive electrode according to the aforementioned example embodiments.

The positive electrode for a rechargeable lithium battery according to the aforementioned example embodiments may take advantage of a solid electrolyte while compensating for the disadvantage of low conductivity.

Accordingly, a rechargeable lithium battery including a positive electrode according to the aforementioned example embodiments may exhibit desired or improved cycle-life characteristics, stability, output characteristics, and the like.

### BRIEF DESCRIPTION OF THE DRAWINGS

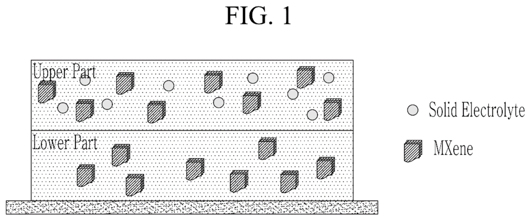

FIG. 1 is a schematic view illustrating a positive electrode active material layer for a rechargeable lithium battery according to some example embodiments.
FIGS. 2 to 5 are schematic views illustrating rechargeable lithium batteries according to some example embodiments.

### DETAILED DESCRIPTION

Hereinafter, example embodiments of the present disclosure are described in detail. However, these embodiments are examples, the present disclosure is not limited thereto, and the present disclosure is defined by the scope of claims.

As used herein, when a specific definition is not otherwise provided, it is understood that when an element such as a layer, film, region, or substrate is referred to as being "on" another element, the element can be directly on the other element, or intervening elements may also be present therebetween.

As used herein, when a specific definition is not otherwise provided, the singular may also include the plural. In addition, unless otherwise specified, "A or B" may mean "including A, including B, or including A and B."

As used herein, "combination thereof" may indicate a mixture, a stack, a composite, a copolymer, an alloy, a blend, or a reaction product of constituents.

As used herein, when a definition is not otherwise provided, a particle diameter may be an average particle diameter. In addition, the particle diameter may refer to an average particle diameter (D50), which means the diameter of particles having a cumulative volume of 50 volume% in the particle size distribution. The average particle diameter (D50) may be measured by a method known to those skilled in the art, for example, by a particle size analyzer, or by a transmission electron microscope image, or a scanning electron microscope image. Alternatively, a dynamic light-scattering measurement device may be used to perform a data analysis, and the number of particles is counted for each particle size range. From this, the average particle diameter (D50) value may be readily obtained through a calculation. Alternatively, the average particle diameter can be measured using a laser diffraction method. When measuring by the laser diffraction method, for example, the particles to be measured are dispersed in a dispersion medium, and then introduced into a commercially available laser diffraction particle diameter measuring device (e.g., Microtrac MT 3000), and ultrasonic waves of ≥ 28 kHz with an output of 60 W are irradiated to calculate an average particle diameter (D50) on the basis of 50% of the particle diameter distribution in the measuring device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Positive Electrode:

Some example embodiments include a positive electrode for a rechargeable lithium battery including a substrate and a positive electrode active material layer on the substrate. The positive electrode active material layer includes MXene, a solid electrolyte, and a positive electrode active material. The solid electrolyte has an increasing distribution from a lower portion near the substrate of the positive electrode active material layer to an upper portion further from the substrate.
(1) The positive electrode for a rechargeable lithium battery according to the aforementioned example embodiments includes a solid electrolyte.

As described above, when a solid electrolyte is applied to the positive electrode, an amount of liquid electrolyte required is reduced, which can improve the low-temperature cycle-life and battery stability of the rechargeable lithium battery.

(2) The positive electrode for a rechargeable lithium battery according to the aforementioned example embodiments includes MXene.

In addition, the 'Maxene' (also referred to as MXene) is a two-dimensional nanomaterial in which transition metal layers and carbon layers are stacked, e.g., alternately stacked, and may exhibit desired or improved electrical conductivity compared to generally known conductive materials (e.g., carbon, graphene, and the like,).

In some example embodiments, the generally known conductive materials are replaced with the MXene or combined with the MXene. Accordingly, the insufficient electrical conductivity of the solid electrolyte can be supplemented.

(3) In the positive electrode for a rechargeable lithium battery according to the aforementioned example embodiments, the distribution of the solid electrolyte increases from the lower portion near the substrate of the positive electrode active material layer to the upper portion further from the substrate.

Accordingly, while it is possible to achieve effects such as reducing R_{ct} (charge transfer resistance), reducing or suppressing lithium precipitation and side reactions, and reducing electrolyte solution consumption at the upper portion of the positive electrode that is in direct contact with the electrolyte solution, it is possible to increase amounts of a highly conductive MXene and/or a positive electrode active material that is a capacity-producing material, at the lower portion of the positive electrode that is not in direct contact with the electrolyte solution.

The distributions of each of the MXene and the positive electrode active material are described below.

Hereinafter, the portion of the positive electrode active material layer close to the substrate is referred to as the 'lower portion,' and the portion further from the substrate is referred to as the 'upper portion,' and the positive electrode according to the aforementioned example embodiments is described in detail below.

### Solid Electrolyte

Based on a total amount of 100 wt% of the positive electrode active material layer, an amount of the total solid electrolyte distributed in the lower and upper portions of the positive electrode active material layer may be in a range of ≥ 0.1 wt% to ≤ 5 wt%, about 0.2 wt% to ≤ 3 wt%, or about 0.5 wt% to ≤ 2 wt%.

An amount of the solid electrolyte distributed in the lower portion of the positive electrode active material layer may be in a range of ≥ 0 wt% to ≤ 5 wt%, 0 wt% to ≤ 3 wt%, or 0 wt% to ≤ 2 wt%; and an amount of the solid electrolyte distributed in the upper portion of the positive electrode active material layer may be in a range of ≥ 0.5 wt% to ≤ 2 wt%.

The solid electrolyte may not be distributed in the lower portion of the positive electrode active material layer.

For example, an amount ratio of the solid electrolyte and the MXene may be in a range of ≥ 0:100 to ≤ 50:50, about 0:100 to ≤ 40:60, or about 0:100 to ≤ 30:70 at the lower portion of the positive electrode active material layer; and in a range of ≥ 10:90 to ≤ 50:50, about 20:80 to ≤ 50:50, or about 30:70 to ≤ 50:50 at the upper portion of the positive electrode active material layer, and the distribution may increase from the lower portion to the upper portion of the positive electrode active material layer. Herein, the amount ratio can indicate a weight ratio.

An amount of the solid electrolyte at the boundary between the lower and upper portions of the positive electrode active material layer may be increased, e.g., intermittently increased. For example, the boundary between the lower and upper portions of the positive electrode active material layer may be located within a range of ≥ 30% to ≤ 70%, about 40% to ≤ 60%, or about 50% of the total thickness of the positive electrode active material layer (100% of the total thickness).

Among the above, the amount of the solid electrolyte at the lower portion of the positive electrode active material layer being '0 wt%,' and the amount ratio of the solid electrolyte and the MXene being '0:100' means that the solid electrolyte may not be included at the lower portion of the positive electrode active material layer.

When the above ranges are satisfied, the effects of the solid electrolyte, the MXene, and the positive electrode active material may be harmonized.

The solid electrolyte may be or include an oxide-based solid electrolyte.

The oxide-based solid electrolyte may be or include at least one of Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y} Ti_{y}O₃(PLZT)(0≤x<1, 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTiy(PO₄)3 (0<x<2, 0<y<3), LiₓAl_{y}Ti_{z}(PO₄)₃ (0<x<2, 0<y<1, 0<z<3) (LATP), Li_{1+x+y}(Al, Ga)ₓ(Ti, Ge)₂₋ₓSi_{y}P_{3-y}O₁₂ (0≤x≤1 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂(M = Te, Nb, or Zr, 0≤x≤10), or a combination thereof.

For example, the oxide-based solid electrolyte may be or include LiₓAl_{y}Ti_{z}(PO₄)₃ (0<x<2, 0<y<1, 0<z<3) (LATP) having a NASICON structure, which has the advantage of being suitable for application to high-voltage, high-power batteries because the oxide-based solid electrolyte has high ionic conductivity and a wide potential window compared to other oxide-based solid electrolytes.

### MXene

Based on a total amount of 100 wt% of the positive electrode active material layer, an amount of the total MXene distributed in the lower and upper portions may be in a range of ≥ 0.1 wt% to ≤ 10 wt%, about 0.5 wt% to ≤ 5 wt%, or about 1 wt% to ≤ 4 wt%.

Additionally, the MXene may be uniformly, or substantially uniformly, distributed in the lower and upper portions of the positive electrode active material layer.

When the MXene is uniformly, or substantially uniformly, distributed in the amount in the lower and upper portions of the positive electrode active material layer, there is an effect of uniformly, or substantially uniformly, supplementing the electrical conductivity in the lower and upper portions of the positive electrode active material layer.

The MXene may be represented by Chemical Formula 1 below.

Chemical Formula1: (M¹)ₘ(X¹)ₙTₛ;

In Chemical Formula 1, X¹ may be located within the octahedral array of M¹.

M¹ may include a metal from at least one of a Group IIIB metal, a Group IVB metal, a Group VB metal, a Group VIB metal, and a combination thereof.

X may include one of C or N.

m may be an integer in a range of 1 to 3, and n may be an integer in a range of 0 to 3.

Tₛ may include a functional group such as or including at least one of alkoxide, carboxylate, halide, hydroxide, hydride, oxide, sub-oxide, nitride, sub-nitride, sulfide, thiol, and a combination thereof.

For example, the MXene may be or include Ti₃C₂.

### Positive Electrode Active Material

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: Liₐ₁Niₓ₁M¹_{y1}M²_{z1}O_{2-b1}X_{b1}.

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² each independently is or includes at least one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 13: Liₐ₃Feₓ₃M⁴_{y3}PO_{4-b3}X_{b3}.

In Chemical Formula 13, 0.9≤a3≤1.8, 0.6≤x3≤1, 0≤y3≤0.4, and 0≤b3≤0.1, M⁴ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

The positive electrode active material may be composed of or include a lithium iron phosphate-based compound alone, or may include a mixture of a lithium iron phosphate-based compound and at least one of a composite oxide of lithium and a metal such as or including at least one of cobalt, manganese, nickel, and a combination thereof.

In the distribution of the positive electrode active material, a mixture of at least one compound oxide of lithium and a metal such as or including at least one of cobalt, manganese, nickel, and a combination thereof and a lithium iron phosphate-based compound, may be distributed in the upper portion of the positive electrode active material layer. For example, the lithium iron phosphate-based compound alone may be distributed in the upper portion of the positive electrode active material layer.

The composite oxide of lithium and a metal such as or including at least one of cobalt, manganese, nickel, and a combination thereof may have a nickel content that is greater than or equal to ≤ 80 mol% based on 100 mol% of the metal excluding lithium.

The composite oxide of lithium and a metal such as or including at least one of cobalt, manganese, nickel, and a combination thereof may be or include a compound represented by Chemical Formula 11, and the lithium iron phosphate-based compound may be or include a compound represented by Chemical Formula 13.

### Positive Electrode

The positive electrode for a rechargeable lithium battery may include a current collector, and a positive electrode active material layer on the current collector.

The positive electrode active material layer may include a positive electrode active material, and may further include a binder and/or a conductive material.

For example, the positive electrode may further include an additive that can constitute a sacrificial positive electrode.

An amount of the positive electrode active material may be in a range of ≥ 90 wt% to ≤ 99.5 wt% or about 94 to ≤ 98.5 wt% based on 100 wt% of the positive electrode active material layer, and the amount of each of the binder and the conductive material may be in a range of ≥ 0.5 wt% to ≤ 5 wt% based on 100 wt% of the positive electrode active material layer.

The binder improves binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity, and any electrically conductive material may be used as a conductive material unless the electrically conductive material causes an adverse chemical change in the battery. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

### Rechargeable Lithium Battery:

Some example embodiments include a rechargeable lithium battery including the positive electrode of the aforementioned example embodiment, the negative electrode, and a separator between the positive electrode and the negative electrode.

Because this includes the positive electrode of the aforementioned example embodiment, desired or improved cycle-life characteristics, stability, output characteristics, and the like, may be exhibited.

Hereinafter, a rechargeable lithium battery of some example embodiments is described in detail, excluding any description that overlaps with the above.

### Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0 < x ≤ 2), a Si-Q alloy (wherein Q is an element such as or including at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

### Negative Electrode

A negative electrode for a rechargeable lithium battery includes a current collector, and a negative electrode active material layer on the current collector. The negative electrode active material layer includes a negative electrode active material, and may further include a binder and/or a conductive material.

For example, the negative electrode active material layer may include about 90 wt% to ≤ 99 wt% of the negative electrode active material, about 0.5 wt% to ≤ 5 wt% of the binder, and about 0.5 wt% to ≤ 5 wt% of the conductive material.

The binder adheres the negative electrode active material particles to each other, and adheres the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder is or includes a polymer material capable of being fiberized, and may be or include, for example, at least one of polytetrafluoroethylene, polyvinylidene fluoride, polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes an adverse chemical change in the battery. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless-steel foil, a titanium foil, a nickel foam, a copper foam, a polymer substrate coated with a conductive metal, and a combination thereof.

### Electrolyte Solution

An electrolyte solution for a rechargeable lithium battery includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone, or in a mixture of two or more types of solvents.

In addition, when using a carbonate-based solvent, a cyclic carbonate and a chain carbonate may be mixed, and the cyclic carbonate and the chain carbonate may be mixed in a volume ratio in a range of ≥ 1:1 to ≤ 1:9.

The electrolyte solution may further include at least one of vinylethyl carbonate, vinylene carbonate, fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, or a combination thereof as an additive.

The lithium salt dissolved in the organic solvent supplies lithium ions in a battery, enables an operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

### Separator

Depending on the type of rechargeable lithium battery, a separator may be present between the positive and negative electrodes. The separator may include at least one of polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/polypropylene three-layer separator, and the like.

The separator may include a porous substrate and a coating layer including an organic material, an inorganic material, or a combination thereof, on one surface, or on both surfaces, of the porous substrate.

The porous substrate may be or include a polymer film formed of or including any one polymer such as at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

### Rechargeable Lithium Battery

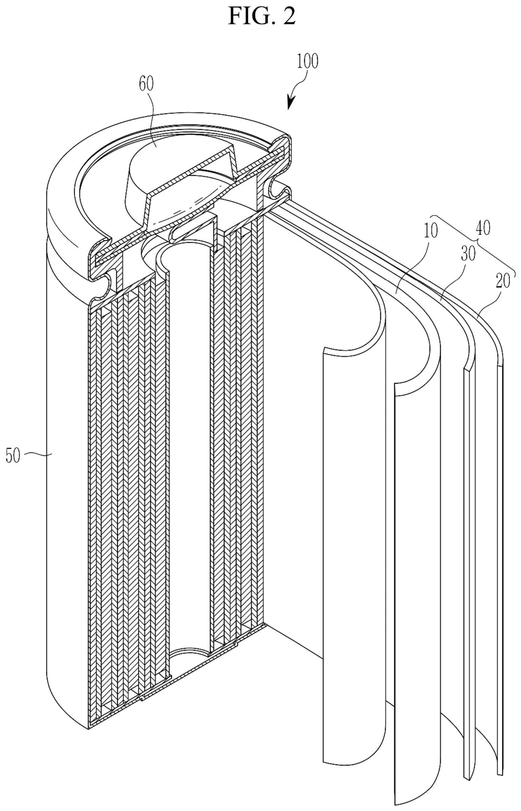

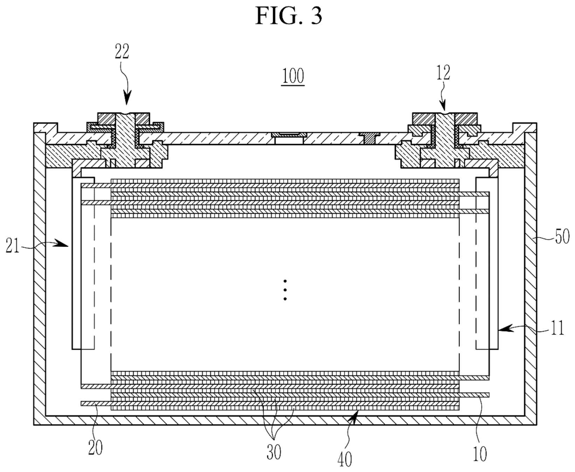

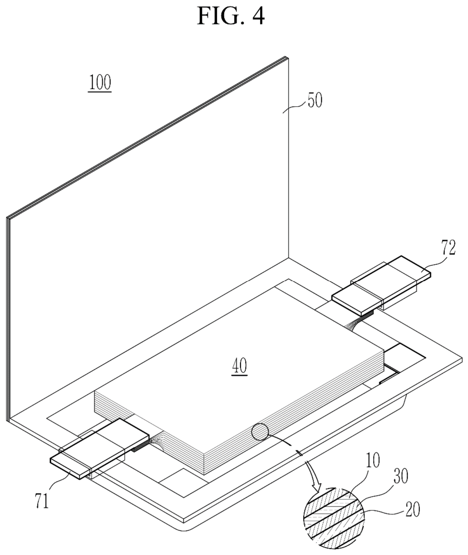

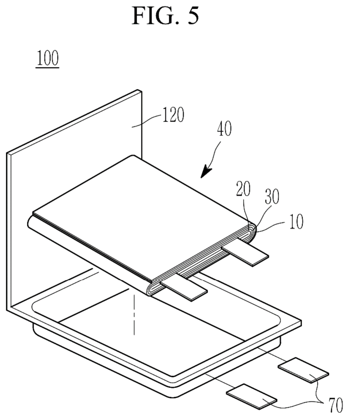

The rechargeable lithium battery may be classified into cylindrical, prismatic, pouch, or coin-type batteries, and the like depending on the shape thereof. FIGS. 2 to 5 are schematic views illustrating the rechargeable lithium battery according to some example embodiments, where FIG. 2 illustrates a cylindrical battery, FIG. 3 illustrates a prismatic battery, and FIGS. 4 and 5 illustrate a pouch-shaped battery. Referring to FIGS. 2 to 5, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50, as shown in FIG. 2. Additionally, in FIG. 3, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 4 and 5, the rechargeable lithium battery 100 includes an electrode tab 70 illustrated in FIG. 5, or a positive electrode tab 71 and a negative electrode tab 72 illustrated in FIG. 4, the electrode tabs 70/71/72 forming an electric path for inducing the current formed in the electrode assembly 40 to the outside of the battery 100.

The rechargeable lithium battery according to some example embodiments may be applicable to, e.g., automobiles, mobile phones, and/or various types of electric devices, but the present disclosure is not limited thereto.

Examples and comparative examples of the present disclosure are described below. However, the following examples are only examples of the present disclosure, and the present disclosure is not limited to the following examples.

### Example 1

### (1) Manufacturing of Positive Electrode

Aluminum foil with a thickness of 10 µm was prepared as a positive electrode current collector.

LiFePO₄ and LiNi_{0.88}Co_{0.08}Al_{0.04}O₂ mixed at a weight ratio of 50:50 as positive electrode active materials as a mixed positive electrode active material;
LiₓAl_{y}Ti_{z}(PO₄)₃ (x=1.4, y=0.4, z=1.6) (LATP) as a solid electrolyte;
MXene (Chemical Formula= Ti₃C₂) as a conductive material; and
polyvinylidene fluoride (PVDF) as a binder were mixed in a weight ratio of 94:0.5:3:2.5 to be dispersed in N-methyl-2-pyrrolidone to prepare a first positive electrode slurry.

The first positive electrode slurry was coated on the aluminum foil, dried, and then pressed to form the lower portion of the positive electrode active material layer (thickness: 45 µm).
LiFePO₄ as a single positive electrode active material;
LiₓAl_{y}Ti_{z}(PO₄)₃ (x=1.4, y=0.4, z=1.6) (LATP) as a solid electrolyte;
MXene (Chemical Formula= Ti₃C₂) as a conductive material; and
polyvinylidene fluoride (PVDF) as a binder were mixed in a weight ratio of 93:1.5:3:2.5 to be dispersed in N-methyl-2-pyrrolidone to prepare a second positive electrode slurry.

The second positive electrode slurry was coated on the lower portion of the positive electrode active material layer, dried, and then pressed to form the upper portion of the positive electrode active material layer (thickness: 45 µm).

When the solid content in the first positive electrode slurry is referred to as the first solid content, and the solid content in the second positive electrode slurry is referred to as the second solid content, a weight ratio of the first solid content to the second solid content was 50:50. Thereby, based on the total thickness of the positive electrode active material layer (100%), the thickness of each of the lower and upper portions of the positive electrode active material layer was set to 50%.

### (2) Manufacturing of Rechargeable Lithium Battery Cell

A mixture of artificial graphite and silicon particles in a weight ratio of 93.5:6.5 was used as a negative electrode active material, and the negative electrode active material: styrene-butadiene rubber binder: carboxymethyl cellulose were mixed in a weight ratio of 97:1:2 and dispersed in distilled water to prepare a negative electrode active material slurry.

The negative electrode active material slurry was coated on a 10 µm-thick Cu foil, dried at 100 °C, and then pressed to form a negative electrode active material layer.

An electrolyte solution was prepared by mixing 1.5 M lithium salt (LiPF₆) in a carbonate-based solvent including ethylene carbonate (EC): ethyl methyl carbonate (EMC): dimethyl carbonate (DMC) in a volume ratio of 20:40:40.

The manufactured positive and negative electrodes were assembled to manufacture an electrode assembly, the electrode assembly was accommodated in a case, and the electrolyte solution was injected to manufacture a 2023 coin-type rechargeable lithium battery cell.

### Example 2

A positive electrode and a rechargeable lithium battery cell were manufactured in the same manner as in Example 1,with a difference that in preparing the first positive electrode slurry, the weight ratio of mixing the positive electrode active material, the solid electrolyte, MXene, and the binder was changed to 93.3:0.2:3:2.5, and in preparing the second positive electrode slurry, the weight ratio of mixing the positive electrode active material, the solid electrolyte, MXene, and the binder was changed to 92.7:1.8:3:2.5.

### Example 3

A positive electrode and a rechargeable lithium battery cell of Example 2 were manufactured in the same manner as in Example 1,with a difference that in preparing the first positive electrode slurry, the weight ratio of mixing the positive electrode active material, the solid electrolyte, MXene, and the binder was changed to 94.5:0:3:2.5, and in preparing the second positive electrode slurry, the weight ratio of mixing the positive electrode active material, the solid electrolyte, MXene, and the binder was changed to 92.5:2:3:2.5.

### Example 4

When the solid content in the first positive electrode slurry was referred to as the first solid content, while the solid content in the second positive electrode slurry was referred to as the second solid content, the first solid content and the second solid content were set to a weight ratio of 30:70. Thereby, based on the total thickness of the positive electrode active material layer of 100%, the thicknesses of the lower and upper portions of the positive electrode active material layer were 30 thickness% and 70 thickness%, respectively.

With the above difference, the positive electrode and rechargeable lithium battery cell of Example 4 were manufactured in the same manner as in Example 3.

### Example 5

When the solid content in the first positive electrode slurry was referred to as the first solid content, while the solid content in the second positive electrode slurry was referred to as the second solid content, a weight ratio of the first solid content and the second solid content was set to a ratio of 40:60. Thereby, based on the total thickness of the positive electrode active material layer of 100%, the thicknesses of the lower and upper portions of the positive electrode active material layer were 40 thickness% and 60 thickness%, respectively.

With the above difference, a positive electrode and a rechargeable lithium battery cell of Example 5 were manufactured in the same manner as in Example 3.

### Example 6

When the solid content in the first positive electrode slurry was referred to as the first solid content, while the solid content in the second positive electrode slurry was referred to as the second solid content, the first solid content and the second solid content was set to a weight ratio of 60:40. Thereby, based on the total thickness of the positive electrode active material layer of 100%, the thicknesses of the lower and upper portions of the positive electrode active material layer were 60 thickness% and 40 thickness%.

With the above difference, a positive electrode and a rechargeable lithium battery cell of Example 6 were manufactured in the same manner as in Example 3.

### Example 7

When the solid content in the first positive electrode slurry was referred to as the first solid content, while the solid content in the second positive electrode slurry was referred to as the second solid content, the first solid content and the second solid content was set to a weight ratio of 70:30. Thereby, based on the total thickness of the positive electrode active material layer of 100%, the thicknesses of the lower and upper portions of the positive electrode active material layer were 70 thickness% and 30 thickness%.

With the above difference, a positive electrode and a rechargeable lithium battery cell of Example 7 were manufactured in the same manner as in Example 3.

### Comparative Example 1 (Ref.)

A positive electrode and a rechargeable lithium battery cell of Comparative Example 1 were manufactured in the same manner as in Example 3, with a difference that carbon black was used as a carbon-based conductive material instead of the solid electrolyte in preparing each of the first positive electrode slurry and the second positive electrode slurry.

### Comparative Example 2

A positive electrode and a rechargeable lithium battery cell of Comparative Example 2 were manufactured in the same manner as in Example 3, with a difference that in preparing the first positive electrode slurry, the weight ratio of mixing the positive electrode active material, the solid electrolyte, MXene, and the binder was changed to 93.5:1:3:2.5, and in preparing the second positive electrode slurry, the weight ratio of mixing the positive electrode active material, the solid electrolyte, MXene, and the binder was changed to 93.5:1:3:2.5.

### Comparative Example 3

A positive electrode and a rechargeable lithium battery cell of Comparative Example 3 were manufactured in the same manner as Example 3, with a difference that the order of applying the first positive electrode slurry and the second slurry was changed.

In Tables 1 and 2 below, the amount of each component based on 100 parts by weight of the lower portion, the amount of each component based on 100 parts by weight of the upper portion, and the thickness ratio of the lower portion and the upper portion are summarized.

**Table 1:**

| | | Example 1 | Example 2 | Example 3 | Example 4 | Example 5 | Example 6 | Example 7 |
|---|---|---|---|---|---|---|---|---|
| Lower portion (100 parts by weight) | Positive electrode active material | 94 | 93.3 | 94.5 | 94.5 | 94.5 | 94.5 | 94.5 |
| | Solid electrolyte | 0.5 | 0.2 | 0 | 0 | 0 | 0 | 0 |
| | MXene | 3 | 3 | 3 | 3 | 3 | 3 | 3 |
| | Carbon black | 0 | 0 | 0 | 0 | 0 | 0 | 0 |
| | Binder | 2.5 | 2.5 | 2.5 | 2.5 | 2.5 | 2.5 | 2.5 |
| Upper portion (100 parts by weight) | Positive electrode active material | 93 | 92.7 | 92.5 | 92.5 | 92.5 | 92.5 | 92.5 |
| | Solid electrolyte | 1.5 | 1.8 | 2 | 2 | 2 | 2 | 2 |
| | MXene | 3 | 3 | 3 | 3 | 3 | 3 | 3 |
| | Carbon black | 0 | 0 | 0 | 0 | 0 | 0 | 0 |
| | Binder | 2.5 | 2.5 | 2.5 | 2.5 | 2.5 | 2.5 | 2.5 |
| Lower portion : upper portion thickness ratio | | 5:5 | 5:5 | 5:5 | 3:7 | 4:6 | 6:4 | 7:3 |

**Table 2:**

| | | Comparative Example 1 | Comparative Example 2 | Comparative Example 3 |
|---|---|---|---|---|
| Lower portion (100 parts by weight) | Positive electrode active material | 94 | 93.5 | 92.5 |
| | Solid electrolyte | 0 | 1 | 2 |
| | MXene | 3 | 3 | 3 |
| | Carbon black | 0.5 | 0 | 0 |
| | Binder | 2.5 | 2.5 | 2.5 |
| Upper portion (100 parts by weight) | Positive electrode active material | 93 | 93.5 | 94.5 |
| | Solid electrolyte | 0 | 1 | 0 |
| | MXene | 3 | 3 | 3 |
| | Carbon black | 1.5 | 0 | 0 |
| | Binder | 2.5 | 2.5 | 2.5 |
| Lower portion : upper portion thickness ratio | | 5:5 | 5:5 | 5:5 |

### Evaluation Example 1: Evaluation of Positive Electrode

Each of the positive electrodes of the examples and the comparative examples was evaluated with respect to R_{ct} (electron transfer resistance) as follows, and the results are shown in Tables 3 and 4 below.

As for each of the positive electrodes, a symmetric cell consisting of two positive electrodes was manufactured to measure SC-EIS (square current electrochemical impedance spectroscopy) with an amplitude Va of 5 mV. The measured results were used to separate and measure the electron transfer resistance from internal resistance of each of the positive electrodes by using a transmission line model theory.

**Table 3:**

| | Example 1 | Example 2 | Example 3 | Example 4 | Example 5 | Example 6 | Example 7 |
|---|---|---|---|---|---|---|---|
| R_{ct} | 4.17 | 3.52 | 3.10 | 3.09 | 3.09 | 3.15 | 3.18 |

**Table 4:**

| | Comparative Example 1 | Comparative Example 2 | Comparative Example 3 |
|---|---|---|---|
| R_{ct} | 3.53 | 4.89 | 5.76 |

### Evaluation Example 2: Evaluation of Rechargeable Lithium Battery Cells

Each of the rechargeable lithium battery cells of the examples and the comparative examples was evaluated as follows, and the evaluation results are shown in Tables 5 and 6 below.
(1) Formation Capacity: The cells were 3 cycles charged and discharged within a voltage range of 2.0 V to 3.7 V at 0.1 C (@ 25 °C).
(2) Cycle-life: The cells were 100 cycles charged and discharged within a voltage range of 2.0 V to 3.7 V at 1 C (@ 25 °C).
(3) Output at each rate: The cells were measured with respect to discharge capacity from 0.1 C to 10 C in the voltage range of 2.0 V to 3.7 V (@ 25 °C).

**Table 5:**

| Experiment | | Example 1 | Example 2 | Example 3 | Example 4 | Example 5 | Example 6 | Example 7 |
|---|---|---|---|---|---|---|---|---|
| Formation | 1st Discharge | 159.7 | 159.9 | 160.2 | 158.2 | 156.0 | 161.3 | 162.1 |
| | 0.1C Capa. (mAh/g) | | | | | | | |
| Efficiency | Eff. (%) | 97.2 | 98.7 | 99.1 | 99.2 | 99.2 | 98.5 | 98.1 |
| Cycle | Retention capacity (%) / 100 cycles, 25 °C | 89.4 | 91.1 | 92.3 | 92.1 | 91.5 | 91.8 | 88.6 |
| C-rate (%) | 0.1C | 100 | 100 | 100 | 100 | 100 | 100 | 100 |
| | 0.2C | 97.6 | 98.8 | 99.5 | 99.4 | 99.3 | 98.8 | 98.1 |
| | 0.5C | 96.3 | 97.4 | 99.2 | 99.1 | 98.9 | 97.2 | 96.7 |
| | 1C | 96.4 | 97.2 | 98.9 | 98.5 | 98.6 | 97.0 | 96.5 |
| | 2C | 46.5 | 50.8 | 58.7 | 53.2 | 53.2 | 50.2 | 49.1 |
| | 3C | 21.8 | 25.6 | 35 | 31.3 | 28.8 | 25.3 | 22.3 |
| | 5C | 15.8 | 17.0 | 20.1 | 18.7 | 18.2 | 16.9 | 16.5 |
| | 10C | 5.3 | 5.7 | 8.4 | 6.2 | 6.0 | 5.7 | 5.5 |

**Table 6:**

| Experiment | | Comparative Example 1 | Comparative Example 2 | Comparative Example 3 |
|---|---|---|---|---|
| Formation | 1st Discharge | 150.0 | 158.1 | 155.6 |
| | 0.1C Capa. (mAh/g) | | | |
| Efficiency | Eff. (%) | 95.6 | 97.2 | 96.9 |
| Cycle | Retention capacity (%) / 100 cycles, 25 °C | 86.5 | 88.7 | 84.2 |
| C-rate (%) | 0.1C | 100 | 100 | 100 |
| | 0.2C | 97 | 97.6 | 97.2 |
| | 0.5C | 95.7 | 96.3 | 95.9 |
| | 1C | 96.1 | 96.4 | 96.2 |
| | 2C | 44.9 | 46.4 | 45.3 |
| | 3C | 20.2 | 21.6 | 20.5 |
| | 5C | 15.1 | 15.7 | 15.3 |
| | 10C | 5.1 | 5.3 | 5.1 |

Comparative Example 1 used carbon black as a carbon-based conductive material instead of the solid electrolyte in preparing the first and second positive electrode slurries. Comparative Example 1 exhibited overall deteriorated performance including formation, efficiency, cycle-life, characteristics at each rate, and the like, compared with Examples 1 to 7.

Comparative Example 2 included a solid electrolyte and MXene, but the solid electrolyte exhibited the same distribution at the upper and lower portions. Comparative Example 2 exhibited improved performance, compared with Comparative Example 1, but still overall deteriorated performance, compared with Examples 1 to 7.

Comparative Example 3 included a solid electrolyte and MXene, but the solid electrolyte exhibited an increasing distribution from the upper portion to the lower portion. In other words, this solid electrolyte distribution was opposite to the solid electrolyte distributions of Examples 1 to 7, and accordingly, overall performance was deteriorated compared with those of Examples 1 to 7.

On the contrary, the positive electrodes for a rechargeable lithium battery according to Examples 1 to 7 included a solid electrolyte and MXene, but the solid electrolyte exhibited a gradually increasing distribution from the lower portion to the upper portion. Such a positive electrode for a rechargeable lithium battery according to one example embodiment, which was represented by Examples 1 to 7, may not only take advantage of a solid electrolyte but also compensate for its disadvantage of low conductivity.

Accordingly, a rechargeable lithium battery including a positive electrode according to the aforementioned example embodiments may exhibit desired or improved cycle-life characteristics, stability, output characteristics, and the like.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. **A positive** electrode (10) for a rechargeable lithium battery (100), the positive electrode (10) comprising:
a substrate; and
a positive electrode active material layer on the substrate;
wherein the positive electrode active material layer comprises:
MXene;
a solid electrolyte; and
a positive electrode active material; and
the solid electrolyte has an increasing distribution from a lower portion near the substrate of the positive electrode active material layer to an upper portion further from the substrate.

2. The positive electrode (10) as claimed in claim 1, wherein based on a total amount of 100 wt% of the positive electrode active material layer:
an amount of the total solid electrolyte distributed in the lower and upper portions of the positive electrode active material layer is in a range of ≥ 0.1 wt% to ≤ 5 wt%.

3. The positive electrode (10) as claimed in claim 1 or 2, wherein based on a total amount of 100 wt% of the positive electrode active material layer:
an amount of the solid electrolyte distributed in the lower portion of the positive electrode active material layer is in a range of ≥ 0 wt% to ≤ 5 wt%; and
an amount of the solid electrolyte distributed in the upper portion of the positive electrode active material layer is in a range of ≥ 0.5 wt% to ≤ 2 wt%.

4. The positive electrode (10) as claimed in any of the claims 1 to 3, wherein:
an amount ratio of the solid electrolyte and the MXene distributed in the lower portion of the positive electrode active material layer is in a range of ≥ 0:100 to ≤ 50:50 as a weight ratio;
an amount ratio of the solid electrolyte and the MXene distributed in the upper portion of the positive electrode active material layer is in a range of ≥ 10:90 to ≤ 50:50 as a weight ratio, and
the distribution of the positive electrode active material layer increases from the lower portion to the upper portion.

5. The positive electrode (10) as claimed in any of the claims 1 to 4, wherein at a boundary between the lower and upper portions of the positive electrode active material layer:
an amount of the solid electrolyte is intermittently increased, and
the boundary between the lower and upper portions of the positive electrode active material layer is located within a range of ≥ 30% to ≤ 70% of the total thickness of the positive electrode active material layer.

6. The positive electrode (10) as claimed in any of the claims 1 to 5, wherein:
the solid electrolyte comprises an oxide-based solid electrolyte, and
the oxide-based solid electrolyte comprises at least one of Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y} Ti_{y}O₃(PLZT)(0≤x<1, 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0<x<2, 0<y<3), LiₓAl_{y}Ti_{z}(PO₄)₃ (0<x<2, 0<y<1, 0<z<3) (LATP), Li_{1+x+y}(Al, Ga)ₓ(Ti, Ge)₂₋ₓSi_{y}P_{3-y}O₁₂ (0≤x≤1 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂(M = Te, Nb, or Zr, 0≤x≤10), and a combination thereof.

7. The positive electrode (10) as claimed in any of the claims 1 to 6, wherein based on a total amount of 100 wt% of the positive electrode active material layer:
an amount of the total MXene distributed in the lower and upper portions is in a range of ≥ 1 wt% to ≤ 4 wt%.

8. The positive electrode (10) as claimed in any of the claims 1 to 7, wherein the MXene is substantially uniformly distributed in the lower and upper portions of the positive electrode active material layer.

9. The positive electrode (10) as claimed in any of the claims 1 to 8, wherein the MXene is represented by Chemical Formula 1:
Chemical Formula 1: (M¹)ₘ(X¹)ₙTₛ;
wherein in Chemical Formula 1,
X¹ is located within an octahedral array of M¹;
M¹ comprises a metal from at least one of a Group IIIB metal, a Group IVB metal, a Group VB metal, a Group VIB metal, and a combination thereof;
X comprises one of C and N;
m is an integer in a range of 1 to 3; and
n is an integer in a range of 0 to 3.

10. The positive electrode (10) as claimed in any of the claims 1 to 9, wherein based on a total amount of 100 wt% of the positive electrode active material layer:
an amount of the total positive electrode active material distributed in the lower and upper portions is in a range of ≥ 90 wt% to ≤ 99.5 wt%.

11. The positive electrode (10) as claimed in any of the claims 1 to 10, wherein one of:
the positive electrode active material comprises a lithium iron phosphate-based compound alone; and
the positive electrode active material comprises a mixture of a lithium iron phosphate-based compound and at least one of a composite oxide of lithium and a metal comprising at least one of cobalt, manganese, nickel, and a combination thereof.

12. The positive electrode (10) as claimed in any of the claims 1 to 11, wherein in the distribution of the positive electrode active material:
a mixture of at least one composite oxide of lithium and a metal comprising at least one of cobalt, manganese, nickel, and a combination thereof and a lithium iron phosphate-based compound is distributed in the upper portion of the positive electrode active material layer, and
the lithium iron phosphate-based compound alone is distributed in the upper portion of the positive electrode active material layer.

13. The positive electrode (10) as claimed in any of the claims 1 to 12, wherein the composite oxide of lithium and a metal comprising at least one of cobalt, manganese, nickel, and a combination thereof has a nickel content that is greater than or equal to ≤ 80 mol% based on 100 mol% of the metal excluding lithium.

14. A rechargeable lithium battery (100), comprising:
the positive electrode (10) claimed in any of the claims 1 to 13;
a negative electrode (20); and
a separator (20) between the positive electrode (10) and the negative electrode (20).

15. The rechargeable lithium battery (100) as claimed in claim 14, wherein the rechargeable lithium battery (100) further comprises an electrolyte solution impregnated in the separator (30).
